# EUROPEAN PATENT APPLICATION

(11) **EP 1 923 786 A1**
(43) Date of publication of application: **21.05.2008**
(21) Application number: 06124091.7
(22) Date of filing: 14.11.2006
(51) Int. Cl.: G06F 11/10

(54) **Volatile memory device and data integrity**

(71) Applicant: NEC Electronics Corporation, Kawasaki, Kanagawa 211-8668 (JP)
(72) Inventor: Banks, Anthony, Reading, Berkshire RG5 4HU (GB)
(74) Representative: Gill, David Alan

(57) **Abstract**

The present invention provides for a method of identifying alteration of stored data within a volatile memory device, so as to identify attacks by malicious code, bugs or viruses and wherein, with the volatile memory device employing a refresh procedure for maintaining the validity of data stored therein, the method includes reading the stored data for performing a checksum calculation to identify alteration of the stored data such that as the stored data is read for the checksum calculation it is also read for the said refresh procedure, and so that the checksum calculation can be enabled and controlled within the hardware of the device.

## Description

The present invention provides for a method for verifying content of a volatile memory device, and to such a device and related circuit arrangement.

Volatile memory devices such as Dynamic Random Access Memory (DRAM) devices comprise relatively large, and fast-access, memory devices which find a wide variety of uses.

In particular, within currently available embedded systems, memory devices are incorporated for the storage of program code and data. In order to facilitate fast access to the program code, the operational code is commonly copied from a relatively slow non-volatile mass storage device such as "flash" memory, into a volatile DRAM device. Since such known DRAM devices have much faster access times than, for example, flash memory devices, the operational code can be retrieved relatively quickly such that the overall program-execution time is reduced.

However, with the code held in a volatile storage medium such as DRAM, security issues arise insofar as the code is susceptible to alteration through modification by malicious code such as bugs and/or viruses.

Such security limitations prove undesirable since the storage medium, and the data contained therein, is vulnerable to attack by hackers.

It can therefore prove desirable to verify whether or not the content of the volatile memory storage device has been altered by, for example, malicious code or hacking attempts.

Currently known methods of verifying the integrity of stored data within a volatile memory device, and which seek to determine whether the stored data content has been altered, employ a software-based solution in which the entire memory content is read, and a checksum value of the content is calculated and stored. Subsequently, and generally at regular intervals, the checksum calculation is repeated and the calculated checksum verified against the previous stored value.

Such known software-based solutions for verifying the content of a volatile memory storage device exhibit various limitations and disadvantages. In particular, they are found to be time-consuming and wasteful of resources such as processor bandwidth and power requirements. These can prove particularly disadvantageous issues should the embedded system form part of a battery powered mobile device such as a cell phone handset.

In particular, this known software-based approach requires processor MIPS to be consumed in the checksum calculation and this serves to reduce the availability of the processor for its principal operational task. Also, additional power is consumed by the processor during the checksum calculation.

Finally, an arrangement for ensuring that the checksum calculation occurs on a regular basis is required and, since this in any case has to be a secure procedure, additional hardware is required and which is located within a secure domain of the device in which the volatile memory is located.

Also, Error Correction Circuitry (ECC) is commonly provided within such known memory devices and which is arranged to provide for "soft error" correction should generally single-bit, errors arise within the device. Such soft errors generally occur due to alpha particle radiation, or other error-inducing effects.

US Patents 6697992, 4694454 , 4758192, 5127014 and 6065146 all relate to known memory devices including error correction functionality in which the ECC is arranged to perform its operation during the refresh cycle of the volatile device.

As is well known, volatile memory devices require a refresh procedure since the capacitor cells within the devices cannot hold their charges indefinitely, and so cannot store data indefinitely such that each stored value has to be refreshed regularly in order to remain valid. By virtue of such a refresh arrangement, the entire contents of the DRAM device are read on a regular basis in order to ensure that they retain their validity.

Such ECC functionality is arranged to detect and correct soft data errors which, as noted, are not generally caused by user operation/intervention

That is, ECC is arranged only to detect and correct one or two bit errors and with a reasonable length of correction code. ECC could not therefore be employed to detect a malicious modification which will effect a far greater number than one or two bits of the data. ECC would not therefore be suitable to detect relatively large scale errors as would be caused by malicious alterations of the data content. Yet further, ECC exhibits further limitations preventing it from effectively detecting malicious alterations since any attempt to modify the code will require a write operation to memory device. During such a process of writing to the memory device, the ECC would then be updated to reflect the new content and so any such malicious alterations would then appear to the ECC functionality as normal valid writes.

The present invention seeks to provide for a method of identifying alterations to stored data within a volatile memory device, and to such a related device and related circuit arrangement, having advantages over known such methods, devices and arrangements.

In particular, the present invention seeks to provide for such a method, and related device and circuit arrangement, which can serve to detect changes to protected areas of code by malicious operations, rather than looking for mere soft errors, and without any desire to seek correction to any such alterations that might be identified.

According to a first aspect of the present invention there is provided a method of identifying alteration of stored data in a volatile memory device employing a refresh procedure for maintaining the validity of data stored therein, the method including reading the stored data for performing a checksum calculation to identify alteration of the stored data, wherein the stored data is read for the checksum calculation as it is read for the said refresh procedure.

The present invention can prove advantageous insofar as it overcomes the bandwidth requirements of conventional software-based calculation of the checksum. Also, the extra power consumption required by such conventional software-based techniques does not arise in accordance with the present invention and the present method overcomes the scheduling requirements of the software-based technique.

The invention is particularly advantageous insofar as it employs checksum functionality which is independent of normal write operations, and which assists in the detection of malicious alterations.

Yet further, the present invention can add another layer of security since the processor will have no knowledge of which area of the memory is being checked by the internal refresh operation of the DRAM device. Thus, a malicious attack which attempts to modify a particular area of code for its own purposes, and to then restore the code in time for the checksum calculation of this area, is likely to fail since it will not be readily possible for the malicious code to identify which area of the memory is safe to modify.

Thus, in general, the present invention can provide for a secure environment for processing code but without exhibiting overheads associated with checksum calculations using software-based techniques.

This gives direct benefits in terms of reduced power consumption and improved processor availability. Of course, reduced power consumption is a particular advantage for mobile equipment relying on battery power such as a cell phone handset.

The reduced processor load can also provide for a potential cost-advantage since a smaller, or slower, processing device is then required for a given secure application.

The improved security aspects will therefore prove beneficial to, for example, a mobile radio communications device seeking to meet security requirements within operating standards.

The present invention therefore advantageously provides for a method for verifying the content of a volatile memory device such as a DRAM and so as to determine that the contents remain unchanged after the initial program load.

Such known and fast volatile devices can then be readily used in association with embedded systems incorporating memory devices for the storage of program code and data.

Yet further, it will be appreciated that the present invention provides for the incorporation of checksum calculation within the hardware of the DRAM memory device. This therefore removes the requirement for the processor to undertake calculations using software-based techniques.

Thus, with reference to the disadvantages arising in the prior art, the processor MIPS is overcome since the calculations are performed within hardware in the memory device and so no additional processor activities are required in order to perform the calculations.

The additional power consumption experienced by the current art does not therefore arise in relation to the present invention since the calculations are performed in hardware in the memory device and, again, this requires no processor activity nor associated power consumption.

Finally, the scheduling requirement found in the prior art does not arise since the regular checksum calculation can be handled by the hardware within the DRAM memory device.

Preferably, the method includes definition of the portion of the memory device of which a checksum calculation is to be carried out.

In particular, the definition of the said portion corresponds to the definition of the portion of the device which is to be refreshed as part of the refresh procedure.

Controlling the size of the checksum area in this manner advantageously serves to reduce power consumption insofar as checksum generation logic is run only when required. It also allows memory space to be partitioned into code and data areas such that data can change as required without affecting the checksum calculation.

As a further advantage, the method can include the selective enabling of the checksum calculation in a periodic manner so as to enhance the power saving that can be achieved.

In particular, the checksum calculation is enabled only at predetermined intervals.

As will be appreciated from the following description the invention can employ a checksum derived from the addition of row data information from the memory array of the memory device. As an alternative, the checksum can result from an exclusive OR operation conducted between subsequent refresh rows.

This latter arrangement can prove particularly advantageous insofar as it requires less silicon area within the device.

Preferably, the checksum calculation is arranged so as to clear internal registers prior to the commencement of a checksum calculation cycle.

Also, control logic can be provided to calculate an intermediate checksum which can, as required, be stored at the end of the checksum calculation cycle.

Subsequently, the checksum control logic can serve to calculate the result of the checksum data.

The present invention can advantageously employ a single register for all checksum calculations and the reading of data for the checksum calculation can correspond to the reading of data from the refresh operation.

Advantageously therefore, the reading of the stored data for the checksum calculation and the refresh operation occurs simultaneously.

According to another aspect of the present invention there is provided a volatile memory device having refreshing means for retaining stored data therein, the device further including checksum calculation means for reading the stored data for determining if the stored data has been altered, and the device being arranged such that the stored data is read for checksum calculation as it is read for the said refresh procedure.

Preferably, the device is arranged to define the portion of the memory device for which a checksum calculation is to be carried out.

As with the method defined above, the definition of the said portion can correspond to the definition of the portion of the device which is to be refreshed as part of the refresh procedure.

Further, the device can be arranged for the selective enabling of the checksum calculation in a periodic manner, such as at periodic intervals. Such an arrangement enhances the power saving available in accordance with the present invention.

In particular, the invention can employ a checksum which results in addition of row data information from the memory array of the memory device.

As an alternative, the checksum can result from an exclusive OR operation conducted between subsequent refresh rows.

As noted above, this latter arrangement can prove advantageous insofar as it requires less silicon area within the device.

The device of the present invention advantageously employs a single register for all checksum calculations and the reading of data for the checksum calculation can correspond to the reading of data from the refresh operation.

Advantageously therefore, the reading of the stored data for the checksum calculation and the refresh operation occurs simultaneously.

In particular, the present invention can provide for a mobile radio communications device including a volatile memory device such as that defined above.

Also the device can include a checksum generation block comprising a checksum storage register, arranged to store the result of a previous checksum calculation.

Further, the checksum generation block can also comprise an internal working register arranged to store a working value of a checksum calculation as each row of a memory array is evaluated.

Advantageously, the result of the checksum calculation is stored in a status result register and a logical operation block can be provided so as to calculate a logical exclusive OR function between newly received row data and previously stored intermediate result data within the internal working register.

Finally, a compare equality block can be provided which is arranged for comparison of data patterns found within the internal working register and the checksum storage register.

The present invention can also provide for a checksum calculation element arranged to receive stored data of a volatile memory device to calculate a checksum thereof for determining if the stored data has been altered, the device being arranged to receive the stored data as it is read during a refresh procedure within the volatile memory device.

The checksum element can be arranged for the selective enabling of the checksum calculation in a periodic manner, and in particular so as to be enabled only at predetermined intervals. Such an arrangement enhances the power saving available in accordance with the present invention.

In particular, the checksum element is arranged to generate a checksum derived from the addition of row data information from a memory array of the memory device.

As noted above, and as an alternative, the checksum can result from an exclusive OR operation conducted between subsequent refresh rows.

Preferably, the checksum calculation within the said checksum element is arranged so as to clear internal registers prior to the commencement of a checksum calculation cycle.

Also, control logic can be provided for calculation of an intermediate checksum which can, as required, be stored at the end of the checksum calculation cycle.

Subsequently, calculation of the checksum result can be completed.

Further, the checksum generation block can comprise an internal working register arranged to store a working value of a checksum calculation as each row memory array is evaluated.

Advantageously, the result of the checksum calculation is stored in the status result register and a logical operation block can be provided so as to calculate a logical exclusive OR function between newly received row data and previously stored intermediate result data within the internal working register.

Finally, a compare equality block can be provided which is arranged for comparison of data patterns found within the internal working register and the checksum storage register.

It should of course be appreciated that the present invention does not include the use of ECC functionality as known in the current art although it will be preferred that such ECC functionality is incorporated within the design of the memory device to which the present application is applied. In this manner, soft errors will be corrected by the ECC mechanism and therefore will not cause a false detection of malicious code alteration.

The invention is described further hereinafter by way of example only, with reference to the accompanying drawings in which:
Fig. 1 is a schematic block diagram of a DRAM device according to an embodiment of the present invention;
Fig. 2 is a schematic block diagram of the checksum generation unit within the checksum generation block of Fig. 1;
Fig. 3 is timing diagram illustrating the manner of output from the checksum status register of Fig. 2; and
Figs. 4A-4D comprise timing diagrams according to one example of a checksum calculations cycle according to an embodiment of the present invention.

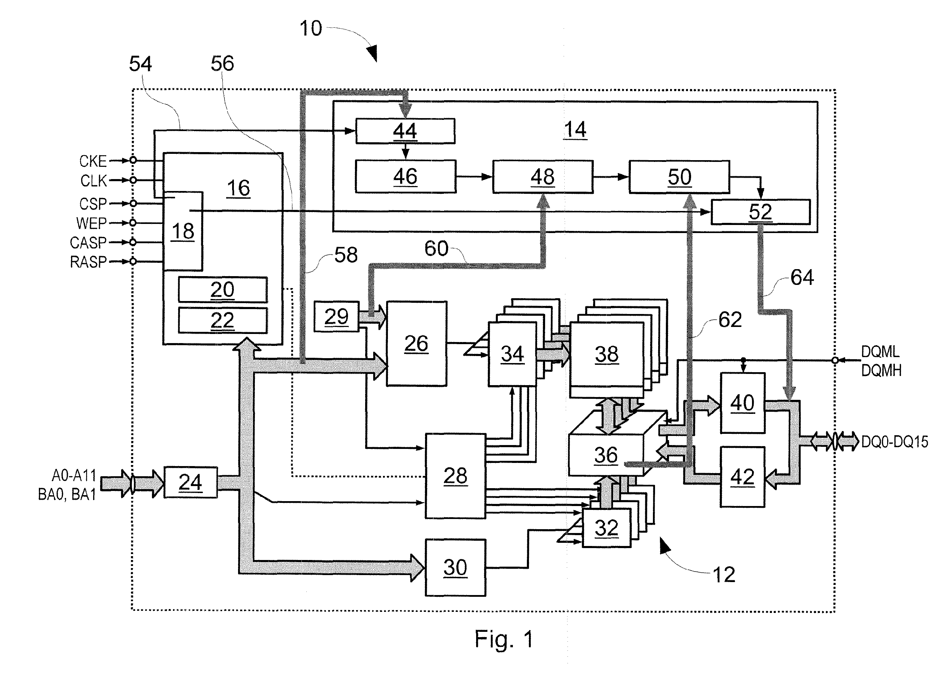

Turning first to Fig. 1, there is illustrated in block diagrammatic form an embodiment of the present invention derived from the structure of a typical DRAM memory device which, in the illustrated embodiment, is based upon the data sheet for a Micron MD48H32M16LF memory device.

The device illustrated within Fig. 1 actually comprises a synchronous device (SDRAM) and, as discussed further below, has an internal structure that employs a row address to index into each column of a memory array such that each read operation will result in the entire column being read out via sense amplifiers.

As part of the required refresh operation, each row within the device is read and, as this occurs the internal logic within the device refreshes the charge on the memory bits within each row.

As discussed above, and as detailed below, the present invention is arranged such that each time the refresh read operation occurs, the data from the entire column will be presented to the input of a logic block required by the present invention for performing a checksum calculation so as to verify that the stored data within the memory device has not been altered.

The checksum calculation therefore occurs at the same time as the refresh operation.

While it will be noted that some additional control logic will be required in order to reset the value of the checksum accumulator once the row address has covered the entire address base, in a particularly simple embodiment, such reset can be arranged to occur when the row address reaches zero.

Insofar as Fig. 1 is based upon the above-mentioned MT4H32M16LF device, it will be appreciated that this serves to illustrate one of a variety of possible implementations of the invention and so the illustrated example is not intended to comprise an exhaustive description and it should be appreciated that the exact implementation will depend upon the detailed design of the volatile memory device concerned.

Also, with regard to the illustrated embodiment, the detailed operation of the existing Error Correction Circuitry (ECC) is not described although, as noted above, that such ECC functionality is likely to be employed in addition to the checksum generation of the present invention.

A typical device such as that illustrated in Fig. 1 and to which the invention is applied generally offers two refresh modes of operation.

The first or "auto-refresh" mode is intended to be used when the device is in normal operation and to start this operation, an autorefresh command is sent to the device, which causes it to refresh the memory row which is addressed by the current value of the internal refresh row counter. Once this action is complete the refresh row counter is incremented in preparation for the refreshing of the next row when a subsequent autorefresh command is sent from the host controller. This refresh mode is intended for use during normal active operation of the host processor. It is the responsibility of the host processor to ensure that sufficient autorefresh commands are sent in order to maintain the data contents of the DRAM. Within the illustrated embodiment, the entire array must be refreshed every 64ms. As the device contains 8192 rows this means that the average rate of autorefresh commands must be once every 7.8us. These commands can either be sent as one burst in an interval of 64ms or in any other convenient pattern as long as the entire device is refreshed every 64ms.

A second mode of refresh operation is known as 'self refresh'. This mode is entered by way of a self refresh command sent to the device. When in this self refresh state, the device does not require any external clocks and will generate internal refresh cycles at a rate sufficient to maintain the content of the memory array. This mode is intended for use when the main processor is inactive, but the memory content has to be maintained for use when the processor becomes active again.

In either of these modes it is apparent that the rows are read, and the refresh counter is incremented, on a regular basis. It is this operation that is advantageously adapted in order to provide the previously outlined checksum generation.

Turning now to Fig. 1 there is illustrated an SDRAM device 10 offering a memory structure 12 with refresh functionality and wherein a checksum generation block 14 offering the advantageous functionality of the present invention is included.

However, it should be appreciated that such a generation block can be provided externally of the memory device 10 itself.

As noted above, the illustrated embodiment is based on a currently available device and so contains control logic 16 arranged to receive commands by way of command decoder 18, which control logic 16 also includes mode registers 20, 22.

Address signals are delivered to the device 10 by way of an address register 24 which is arranged to communicate with a row address multiplexer 26, bank memory control logic 28 and a column address counter/latch 30 which feeds to a column decoder 32.

Outputs from the bank memory control logic 28 are delivered to the column decoder 32 and a bank row-address latch and decoder 34. The column decoder 32 delivers data to read data latch write drivers 36 which, via sense amplifiers, deliver data to the bank memory array 38 which is also arranged to receive row-address data output from the latch decoder 34.

Data output/input registers 40, 42 provide for an interface with the reading latch write drivers 36 to enable data to be written to and read from the memory array. Turning now to the additional circuit elements provided by the illustrated embodiment of the present invention, within the checksum generation block 14, there is provided a control register 44, control logic 46, address comparator 48, checksum generation logic 50 and status register 52.

The control register 44 is arranged to receive a control register write-enable signal 54, while the status register 52 is arranged to receive a status register read enable 56.

Further, the control register 44 receives address bit data 58 from the address register 24, and the address comparator 48 operates under control of a refresh address signal 60 derived from the refresh counter 29.

The checksum generation logic 50 receives row data 62 from the read data latch write drivers 36 and a status data signal 64 is output from the status register 52 and feeds in to the data output/input register loop 40, 42 as illustrated.

The operation of the checksum generation block 14 embodying the present invention in relation to an SDRAM device 10 is now described in further detail.

Fig. 1 includes the additional functional block 14 which serves to illustrate how the checksum generation logic can be incorporated within the structure of a known device. It should of course be appreciated that Fig. 1 merely serves as an illustration of how the functionality of the present invention can be added to the referenced device. Of course, other devices may have a different architecture and so may require a slightly different implementation.

The checksum generation block 14 is controlled by the control register 44. When the DRAM control logic block 16 detects a write to the checksum control register 44, it pulses the Control Register Write Enable signal 54 high. This causes the contents of the address bus 58 to be latched in to the control register 44. This write operation is initiated by the host processor issuing a Load Mode Register command to the DRAM device with BA1 (banks select bit 1) set low and BA0 (banks select bit 0) set high. This mode register definition is currently unused in the device and so in this illustrated example it is advantageously employed to provide the required decode for the checksum control register 44.

An example structure of the bit fields for the checksum control register is shown below.

| **Bit #** | **BA1** | **BA0** | **A11-A4** | **A3** | **A2** | **A1** | **A0** |
|---|---|---|---|---|---|---|---|
| **Value** | 0 | 1 | Not used set to 0 | CA2 | CA1 | CA0 | Run |

The bit significance is as follows.
BA1 - Bank select bit 1 set low
BA0 - Bank select bit 0 set high

This selects a the checksum control register as the destination address.
A11- Address bit 11 is not used
A10 - Address bit 10 is not used
A9 - Address bit 9 is not used
A8 - Address bit 8 is not used
A7 - Address bit 7 is not used
A6 - Address bit 6 is not used
A5 - Address bit 5 is not used
A4 - Address bit 4 is not used
A3 - Checksum area select Bit 2
A2 - Checksum area select Bit 1
A1 - Checksum area select Bit 0

A0 - Run Enable Bit

The checksum area select bits are used to define the portion of the device over which the checksum calculation is carried out. In this example the checksum area select bits have been chosen to have the same significance as the equivalent bits which are used to determine the portion of the device which is to be refreshed when the device is operating in the low power mode. This is as shown in the following.

| **CA2** | **CA1** | **CA0** | **Checksum Area** |
|---|---|---|---|
| 0 | 0 | 0 | Four Banks (Banks 0 to 4 - Entire device) |
| 0 | 0 | 1 | Two Banks (Banks 0 and 1 -½ device) |
| 0 | 1 | 0 | One Bank (Banks 0 - ¼ device) |
| 0 | 1 | 1 | Not used |
| 1 | 0 | 0 | Not used |
| 1 | 0 | 1 | First half of bank 0 (1/8 device) |
| 1 | 1 | 0 | First quarter of bank 0 (1/16 device) |
| 1 | 1 | 1 | Not used |

Controlling the size of the checksum area in this fashion has two benefits. First, it reduces power consumption by not running the checksum generation logic 50 when it is not required. Secondly, it allows the memory device to be partitioned into code and data areas. The code areas would then be selected to be within the checksum calculation area whilst the data area would be selected to be outside this area. This allows the data to change as required without affecting the checksum calculation.

The run enable bit determines whether or not the checksum calculation is in progress. It allows control of the checksum logic 50 which in turn allows the controlling software to schedule operation of the checksum operation.

For example it may be the case that the calculation is only enabled for a short period of time once every few seconds. This would give adequate protection against code alterations and at the same time minimise the power consumption and CPU time consumed in the checksum verification process.

The outputs of the control register 44 feed into the control logic block 46. The function of this block is to sequence the operation of the other blocks in the system in order to carry out the checksum verification.

The address comparator 48 is used to compare the address of the refresh counter with a predetermined address which is computed from the checksum area control bits. This address is used to determine when the refresh address has reached the upper boundary of the checksum area. The outputs of the address comparator is a signal which feeds in to the checksum generation logic 50. When this signal is active it indicates that the refresh address is within the valid range for checksum calculation.

The checksum generation logic 50 receives the row data information 62 from the memory array 38. Each row of this data consists of 1024 elements of 16 bit entities. As there are four rows this represents a total of 4 x 1024 x 16 = 65536 bits. The task of the checksum generation logic 50 is to take this input for each refresh row and generate a unique key which can be used to verify that the contents of the checksum area have not changed since the last scan. A simple method of implementing this function would be to add the data from each row in order to achieve a conventional checksum of the data. However as the amount of data to be added up is quite large, an alternative method, and one which advantageously uses less silicon area, comprising using a simple exclusive OR operation between subsequent refresh rows.

In general there is likely to be a trade-off between the complexity of the operation and the security, or uniqueness, of the generated key.

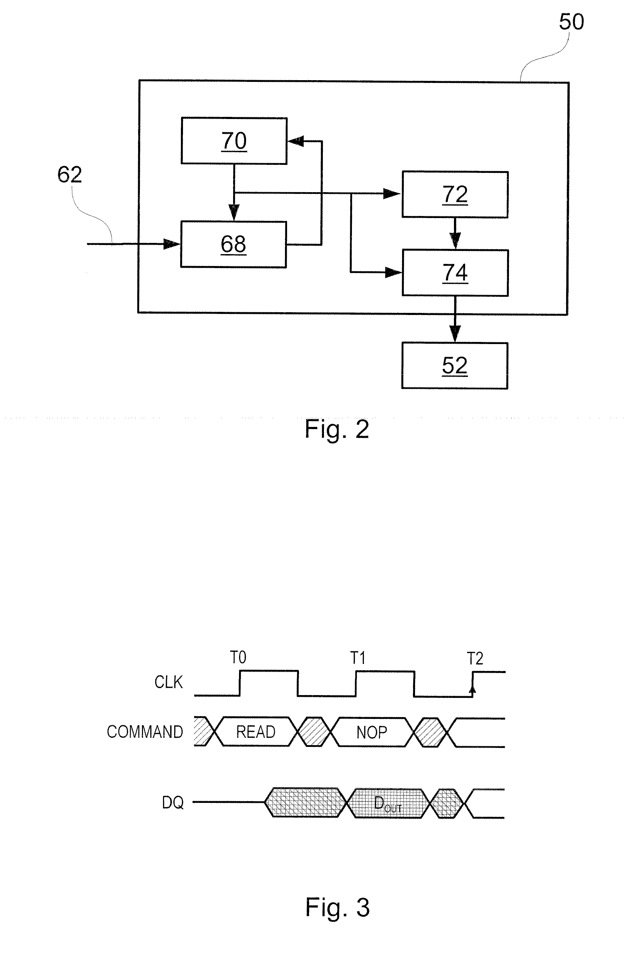

A block diagram and flowchart for the operation of the checksum generation logic 50 which makes use of an exclusive OR logical operation is provided by Fig. 2.

As can be appreciated, the checksum generation logic 50 contains the following elements.

A Logical Operation Block (LOB) 68 which is used to calculate the logical exclusive OR function between the newly received row data and the previously stored intermediate result held in an Internal Working Register (IWR) 70 as described further below. It has two inputs and one output each of which in the above example is 65536 bits wide.

The Internal Working Register (IWR) 70, as mentioned, is used to store the working value of the checksum calculation as each row is evaluated, and has a full width which is required to store the row data information which, in the above example, is 65536 bits wide.

A Checksum Storage Register (CSR) 72 which is used to store the result of the previous checksum calculation. Again it has a full width required to store the row data information which in the above example is 65536 bits wide.

A Compare Equality Block (CEB) 74 used to compare the data patterns held in the IWR 70 and CSR 72. This block has two inputs each of which in the above example is 65536 bits wide. It has a single-bit-width output which is used to update the Status Result Register (SRR) 52 which is used to store the result of the checksum calculation.

There are four distinct functions for the checksum control logic 50 and as executed under the control logic as detailed further below.

The first is a "clear registers" function which is intended simply to clear the active elements IWR 70, CSR 72 and SRR 52 prior to the start of a checksum calculation cycle. The series of steps is as follows:
1. Set all bits in the IWR register 70 to logical zero.
2. Set all bits in the CSR register 72 to logical zero.
3. Set the bit in the SRR register 52 to logical zero.

The second comprises a "calculate intermediate checksum" function. This function is used to calculate the intermediate checksum data pattern and the related steps in the procedure are as follows:
1. Receive the new input row data
2. Perform the logical exclusive OR operation between the new input data 62 in the LOB 68 and the data pattern stored in the IWR 70.
3. Store the new result in the IWR 70.

For this function the active elements are the LOB 68 and the IWR 70.

The third function is arranged to store the result of the checksum data pattern at the end of the first checksum calculation cycle. The result is stored in the CSR 72 and the basic procedural step is:
1. Store the contents of the IWR 70 in to the CSR 72

For this function the active elements are the IWR 70 and the CSR 72.

The final of the four functions comprises "calculate the checksum result" and is used to calculate the result of the checksum data pattern at the end of a checksum calculation cycle. The result is stored in the SRR 52 and the related steps are the following.
1. Supply the data held in the IWR 70 and the CSR 72 to the inputs of the CEB 74.
2. Store the result in the SRR 52.

Thus, it will be appreciated that the active elements comprise the IWR 70, CSR 72, CEB 74 and the SRR 52.

An example illustrative of the generation of the checksum data value is shown in the following table. In this simplified example the data bus is shown as four bits for the sake of clarity. However in practice the data bus width is dependent upon the design architecture of the memory blocks and in the case of the illustrated DRAM device would be 65535 bits.

Also the example only shows four sets of row data in order to retain a manageable table size. However in practice the number of row data values received depends on both the addressing range selected and also the row size of the memory array.

This example illustrates a scenario whereby the data values remained the same between the initial and subsequent checksum calculations and with the register values shown in binary.

| **Step** | **Operation** | **Row Data** | **IWR Value** | **CSR Value** | **SRR Value** | **Comment** |
|---|---|---|---|---|---|---|
| 1. | Clear registers | XXXX | 0000 | 0000 | 0 | Initialisation step |
| 2. | Receive 1^{st} row data | 0010 | 0010 | 000 | 0 | 1^{st} row calculation |
| 3. | Receive 2^{nd} row data | 0100 | 0110 | 000 | 0 | 2^{nd} row calculation |
| 4. | Receive 3^{rd} row data | 0011 | 0101 | 000 | 0 | 3^{rd} row calculation |
| 5. | Receive 4^{th} row data | 1011 | 1110 | 000 | 0 | 4^{th} row calculation |
| 6. | The above sequence is repeated until all rows have been examined | | | | | |
| 7. | Store first checksum result | XXXX | 1110 | 1110 | 0 | CSR = ISR |
| 8. | The next sequence calculates the checksum for the second time It assumes no data modifications have been made | | | | | |
| 9. | Clear registers | XXXX | 0000 | 1110 | 0 | Initialisation step |
| 10. | Receive 1^{st} row data | 0010 | 0010 | 1110 0 | | 1^{st} row calculation |
| 11. | Receive 2^{nd} row data | 0100 | 0110 | 1110 | 0 | 2^{nd} row calculation |
| 12. | Receive 3^{rd} row data | 0011 | 0101 | 1110 | 0 | 3^{rd} row calculation |
| 13. | Receive 4^{th} row data | 1011 | 1110 | 1110 | 0 | 4^{th} row calculation |
| 14. | Compare stored and calculated checksums | XXXX | 1110 | 1110 | 0 | In this case no data changes were made so the new checksum is the same as the first result. This indicated no data changes have occurred. |
| 15. | Steps 9-14 are repeated whilst the checksum verification is enabled. | | | | | |

As another example, there is illustrated in the following table a situation in which the data values have been changed between the initial and subsequent checksum calculations. Again, the register values are shown in binary.

| **Step** | **Operation** | **Row Data** | **IWR Value** | **CSR Value** | **SRR Value** | **Comment** |
|---|---|---|---|---|---|---|
| 1. | Clear registers | XXXX | 0000 | 0000 | 0 | Initialisation step |
| 2. | Receive 1^{st} row data | 0010 | 0010 | 000 | 0 | 1^{st} row calculation |
| 3. | Receive 2^{nd} row data | 0100 | 0110 | 000 | 0 | 2^{nd} row calculation |
| 4. | Receive 3^{rd} row data | 0011 | 0101 | 000 | 0 | 3^{rd} row calculation |
| 5. | Receive 4^{th} row data | 1011 | 1110 | 000 | 0 | 4^{th} row calculation |
| 6. | The above sequence is repeated until all rows have been examined | | | | | |
| 7. | Store first checksum result | XXXX | 1110 | 1110 | 0 | CSR = ISR |
| 8. | The next sequence calculates the checksum for the second time A data modification has been made at step 13 | | | | | |
| 9. | Clear registers | XXXX | 0000 | 1110 | 0 | Initialisation step |
| 10. | Receive 1^{st} row data | 0010 | 0010 | 1110 | 0 | 1^{st} row calculation |
| 11. | Receive 2^{nd} row data | 0100 | 0110 | 1110 | 0 | 2^{nd} row calculation |
| 12. | Receive 3^{rd} row data | 0011 | 0101 | 1110 | 0 | 3^{rd} row calculation |
| 13. | Receive 4^{th} row data | 0100 | 0001 | 1110 | 0 | 4^{th} row calculation - row Data value changed |
| 14. | Compare stored and calculated checksums | XXXX | 0001 | 1110 | 1 | The effect of the changed data value is that the comparison fails and the SRR value is set to 1 to indicate the error to the host |

The output of the checksum logic 50 feeds into the status register 52. This register 52 can be read by the host processor and is used to indicate the operational status and results of the checksum calculation process. The method of reading the status register 52 uses the standard DRAM read command as shown in the following table. This requires that the control signals are in the appropriate states as shown and the commands other than the READ command are shown only for illustrative purposes.

| **Name (Function)** | **CS#** | **RAS#** | **CAS#** | **WE#** | **DQM** | **ADDR** | **DQs** |
|---|---|---|---|---|---|---|---|
| COMMAND INHIBIT (NOP) | H | X | X | X | X | X | X |
| NO OPERATION (NOP) | L | H | H | H | X | X | X |
| ACTIVE (Select bank and activate row | L | L | H | H | X | Bank/Row | X |
| **READ (Select bank and column, and start READ burst)** | **L** | **H** | **L** | **H** | **L/H⁸** | **Bank/Col** | **X** |
| WRITE (Select bank and column, and start WRITE burst) | L | H | L | L | L/H⁸ | Bank/Col | Valid |
| BURST TERMINATE or deep power-down (Enter deep power-down mode) | L | H | H | L | X | X | X |
| PRECHARGE (Deactive row in bank or banks) | L | L | H | L | X | Code | X |
| AUTO REFRESH or SELF REFRESH (Enter self refresh mode) | L | L | L | H | X | X | X |
| LOAD MODE REGISTER | L | L | L | L | X | Op-Code | X |
| Write Enable/Output Enable | X | X | X | X | L | X | Active |
| Write Inhibit/Output-High-Z | X | X | X | X | H | X | High-Z |

It should be appreciated that the existing read command uses address bits A8 to A0 to provide the column address from which the read burst starts, bit A10 serves to define if precharge is to be used and bits B 1 and B0 serve to indicate which bank is to be read from. This means that address bits A11 and A9 are unused. The method suggested here for accessing the checksum status register 52 is to have address bits A11 and A9 high. A normal read would then be indicated by A11 and A9 low.

When the DRAM control logic detects that a read command has been issued with A11 and A9 high it will then enable the checksum status register 52 to output its contents on to the read data bus on the next clock cycle. A timing diagram for this is shown in Fig. 3.

With regard to the preceding table , it should be appreciated that the read checksum status command is indicated by the following conditions.
- CS =: Low
- RAS =: High
- CAS =: Low
- WE =: High
- DQM =: Don't care
- A11 =: High- indicate checksum status read
- A10 =: High - enables auto precharge
- A9 =: High indicate checksum status read
- A8-A0 =: Don't care

As shown in Fig. 3 the data from the status register 52 will be output on the DQ pins during the 'Dout' time.

A suggestion format for the status register 52 is shown below.

| **Bit#** | **15-1** | **0** |
|---|---|---|
| Value | Not used - set to 0 | Indicates checksum result |

Bit 0 is used to indicate the result of the checksum calculation. It is set to low if the checksum calculation indicates no data changes and set high if the data in the checksum area has changed.

There follows below a sequence of operations for the checksum control logic 46. Whilst the 'run' bit of the checksum control register 44 is low the checksum generation logic 50 is held in a reset state. In operation, the status register 52 result bit is set low to indicate no failure and all internal registers are cleared to the default state. In most cases this will be zero.

Where possible all logic is powered down. If this not possible then it will be held in a low power state and this generally requires that no clocks nor signal transitions should occur.

In order to start a checksum calculation cycle, the host processor writes to the checksum control register 44 by way of the process outlined previously. The data pattern written specifies the checksum area and also has the run enable bit set to start the checksum calculation process.

The checksum control logic 46 will then clear the checksum generation logic 50 and set the address comparator 48 to the appropriate limits as requested in the control register checksum area field.

The control logic 46 will then wait for a refresh cycle to occur. When it detects this it will compare the refresh address with the upper and lower limits programmed into the address comparator 48 in the previous step.

If the refresh row address is within the valid range of the checksum area, the control logic 46 will command the checksum generation block 50 to calculate a checksum iteration based upon the refresh row data information. This calculation is carried out by applying the checksum algorithm to the stored checksum data register 72 and the newly acquired refresh row data, and storing the results back into the checksum data register.

If the refresh row address is less than the end address programmed into the address comparator 48, the control logic 46 will enter an idle state in which it continues to monitor for refresh operations. When the next such operation is detected, it will continue operations as from the step above, relating to the wait for a refresh cycle.

If the refresh row address is equal to the end address programmed in to the address comparator, one of two actions will occur.

That is, if this is the first time that the comparison has resulted in equality, this indicates it is the first time that a complete checksum calculation has been completed. In this case the logic cannot make a valid determination of whether the data in the checksum area has changed or not. The result of the calculation is then stored in the checksum generation block 50 ready for use the next time that a calculation has been completed. The result bit in the status register 52 is not updated.

However, if this is not the first time that the comparison has resulted in equality (which will be the case most of the time) then the newly calculated checksum is compared to the previously stored result. This comparison occurs in the checksum generation block 50.

If the comparison results in equality, then the result bit in the status register 52 is set low to indicate that the contents of the checksum area have not changed since the last checksum calculation cycle.

The content of the stored checksum data register 72 held within the checksum generation block 50 is then cleared to its default value. This is generally expected to be zero, but could in principle be any value so long as it is consistent between checksum calculation cycles.

The control logic 46 then returns to the above mentioned step, waiting for a refresh cycle ready for the start of the next checksum calculation cycle.

If the comparison results in inequality, then the results bit in the status register 52 is set high to indicate that the content of the checksum area has changed since the last checksum calculation cycle. The checksum control logic 46 will then enter an idle state waiting for the host processor to read such indication.

If at any point in time the checksum control register 44 is written to with the run bit set to zero, effective asynchronous reset is performed and the control logic will revert to the very first step noted above.

If at any point in time the host processor requests a status read operation, the control logic 46 will cause the output of the status register 52 to be enabled on the DQ output bus. This will be timed to occur on the next rising edge of the clock cycle as described previously.

It is preferred that the control logic 46 carries out all operations in a manner synchronous to the system clock. This prevents any timing issues that could otherwise occur. For example if the status register is being read at the same time as it is being updated by the result of a checksum calculation, timing issues can arise since in this case, the data read would always be valid, and constant, during the read cycle operation.

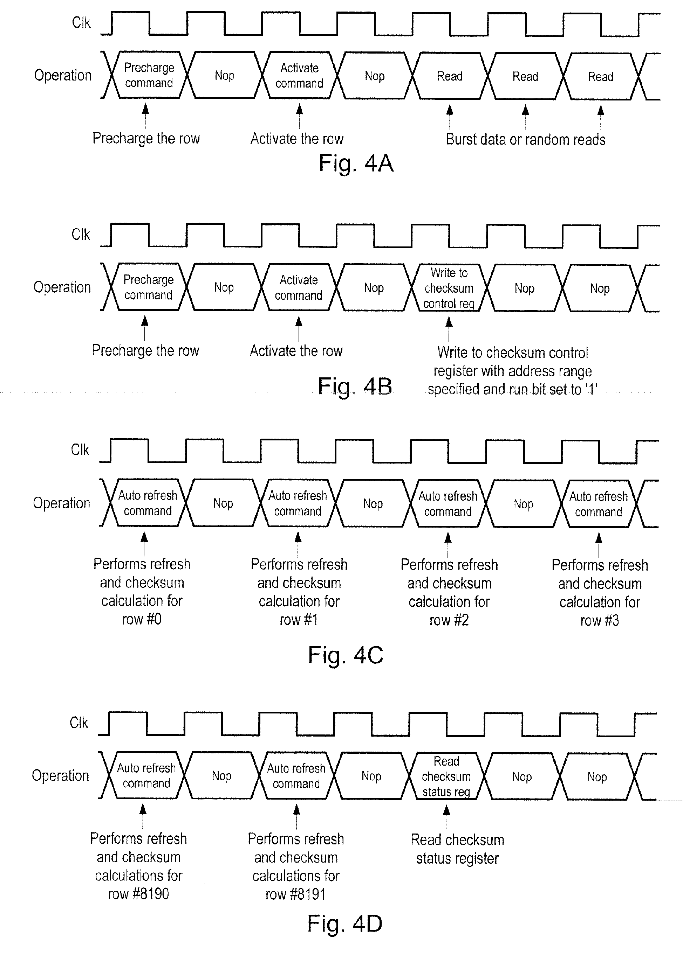

Figs. 4A to 4D, are timing diagrams for an example of a checksum calculation cycle.

The diagrams show normal read operations which consist of a precharge command used to prepare a row for reading, an activate command which opens the row for reading and then three read cycles which could either be burst or random reads.

Following these read cycles the precharge and activate commands are sent to prepare the row for the self refresh operation. In this mode it is assumed that all 8192 rows are to be refreshed sequentially.

It should be appreciated that it is also possible to interleave self refresh cycles with normal read/write operations if desired by the host processor. For the purposes of the diagrams a sequential refresh has been assumed.

At the next stage, the host processor then sends a command to write to the checksum control register 44. This command has a run bit set to enable the checksum control logic 46 and also its checksum address range specified to control the checksum verification memory address range.

The above-mentioned 8192 sequential self refresh commands are then sent. Each of these commands will cause the checksum logic to update the checksum based upon the row data read and the previous value of the IWR 70.

When the last self refresh command for row number 8191 has been sent, the checksum logic will detect that this is the last row in its range and initiate a comparison of the value in the CSR 72 with that in the IWR 70. The result is stored in the status register which is then read by the host processor.

Turning now to the host processor, although not illustrated, an example of a sequence of operations for the host processor is outlined below.

During the initialisation phase, the host processor can write to the checksum logic control register 44 with the run bit clear. This will cause the checksum generation logic to be held in the reset state.

When the host determines that the program code has been loaded to the appropriate memory locations, it can write to the checksum control register 44 with the checksum area bits set as required and with the run bit set high. This will enable generation of the checksum to commence.

The host can then periodically read the status register 52. If the bit is low, no further action is required. However, if the host finds that the bit is set high, the procedure continues as follows. First, the checksum control logic 46 is disabled by writing a zero to the 'run' bit of the checksum control register 44. This is as described above in relation to Fig. 1 and the associated method of operation.

Secondly, the host processor can then take whatever action is required in order to indicate to the user that some of the locked memory area has been modified. The particular details of this action are dependent upon the design of the user interface and the characteristics of the application that the host processor is running. In the case of an embedded system, an example of such an action could be notification to the user that the memory has been corrupted by some malicious means, and then resetting of the system after a particular time delay.

During normal operation it may be that the refresh cycle is suspended prior to completion by the checksum circuit 14. In this case, the checksum control logic will not detect any further refresh operations and so will not perform any more actions. When the refresh cycle resumes, new refresh cycles will be detected and the checksum scanning will continue as before.

If the host processor determines that the memory area which is being scanned by the checksum calculation logic is going to be changed, for example if new program code is to be loaded, then the checksum logic must be disabled prior to changing any of the areas being scanned. This can be achieved by the host writing a zero to the run bit of the checksum control register 44. Then when the code update has been completed, the checksum control protection can be restarted by the process as outlined above in relation to the sequence of operation for the checksum control logic 46.

As will therefore be appreciated from the above, the invention can provide for a method and related volatile memory device which, through calculation of a checksum value calculated during a memory refresh procedure, can offer a suitable level of security without disadvantageously impacting on the performance of a device within which the memory device is employed.

## Claims

1. A method of identifying alteration of stored data in a volatile memory device employing a refresh procedure for maintaining the validity of data stored therein, the method including reading the stored data for performing a checksum calculation to identify alteration of the stored data, wherein the stored data is read for the checksum calculation as it is read for the said refresh procedure.

2. A method as claimed in Claim 1, and including the step of defining a portion of the memory device for which a checksum calculation is to be carried out.

3. A method as claimed in Claim 2, wherein the definition of the said portion corresponds to the definition of a portion of the device which is to be refreshed as part of the refresh procedure.

4. A method as claimed in Claim 1, 2, or 3, and including the selective enabling of the checksum calculation in a periodic manner.

5. A method as claimed in Claim 1, 2, 3 or 4, wherein the checksum results from the addition of row data information from a memory array of the memory device.

6. A method as claimed in Claim 1, 2, 3, or 4, wherein the checksum results from an exclusive OR operation conducted between refresh rows.

7. A method as claimed in any one or more of the preceding claims in which the checksum calculation cycle is arranged to clear internal registers prior to commencement of a checksum calculation.

8. A method as claimed in Claim 7, and including the step of calculating an intermediate checksum to be stored at the end of the checksum calculation cycle.

9. A method as claimed in any one or more of the preceding claims wherein reading of the stored data for the checksum calculation and the refresh operation occurs simultaneously.

10. A volatile memory device having refreshing circuitry for retaining stored data therein, the device further including a checksum calculator for reading the stored data for determining if the stored data has been altered, and the device being arranged such that the stored data is read for checksum calculation as it is read for the refreshing of the stored data.

11. A device as claimed in Claim 10, and arranged for the selective enabling of the checksum calculation in a periodic manner.

12. A device as claimed in Claim 10 or 11, and arranged to employ a checksum resulting from the addition of row data information from a memory array of the memory device.

13. A device as claimed in Claim 10 or 11, and arranged to employ a checksum resulting from an exclusive OR operation conducted between refresh rows.

14. A device as claimed in Claim 10, 11, 12, or 13, and including control logic for calculating an intermediate checksum for storage at the end of a checksum calculation cycle.

15. A device as claimed in any one or more of Claims 10 to 14 and arranged to employ a single register for all checksum calculations.

16. A device as claimed in any one or more of Claims 10 to 15, and arranged such that reading of data for the checksum calculation corresponds to the reading of data for the refresh operation.

17. A device as claimed in Claim 16 and arranged such that reading of the stored data for the checksum calculation and the refresh operation occurs simultaneously.

18. A device as claimed in any one or more of Claims 10 to 17 and including a checksum generation block comprising a checksum storage register arranged to store a result of a previous checksum calculation.

19. A device as claimed in Claim 18, wherein the checksum generation block comprises an internal working register arranged to store a working value of a checksum calculation during memory-array-row evaluation.

20. A device as claimed in Claim 19, wherein the result of the checksum calculation is stored in a status result register and the device further includes a logical operation block arranged to calculate a logical exclusive OR function between newly received row data and previously stored intermediate result data within the internal working register.

21. A device as claimed in Claim 18, 19 or 20 and including a compare equality block for comparison of data patterns found within the internal working register and the checksum storage register.

22. A mobile radio communications device including a volatile memory device as claimed in any one or more of Claims 10 to 21.

23. A checksum calculation element arranged to receive stored data of a volatile memory device to calculate a checksum thereof for determining if the stored data has been altered, the device being arranged to receive the stored data as it is read during a refresh procedure of the volatile memory device.

24. A checksum element as claimed in Claim 23 and arranged for selective enabling of the checksum calculation in a periodic manner.

25. A checksum element as claimed in Claim 23 or 24 and arranged to employ a checksum derived from the addition of row data information from a memory array of the memory device.

26. A checksum element as claimed in Claim 23 or 24 and arranged to employ a checksum derived from an exclusive OR operation conducted between refresh rows.

27. A checksum element as claimed in Claim 23, 24, 25 or 26, and including control logic for calculating an intermediate checksum for storage at the end of a checksum calculation cycle.

28. A checksum element as claimed in any one or more of Claims 23 to 27 and arranged to employ a single register for all checksum calculations.

29. A checksum element as claimed in any one or more of Claims 23 to 28, and arranged such that reading of data for the checksum calculation corresponds to the reading of data from the refresh operation.

30. A checksum element as claimed in Claim 29 and arranged such that reading of the stored data for the checksum calculation and the refresh operation occurs simultaneously.

31. A checksum element as claimed in any one or more of Claims 23 to 30 and including a checksum generation block comprising a checksum storage register arranged to store the result of a previous checksum calculation.

32. A checksum element as claimed in Claim 31, wherein the checksum generation block comprises an internal working register arranged to store a working value of a checksum calculation during memory-array-row evaluation.

33. A checksum element as claimed in Claim 32, wherein the result of the checksum calculation is stored in a status result register and the element further includes a logical operation block arranged to calculate a logical exclusive OR function between newly received row data and previously stored intermediate result data within the internal working register.

34. A checksum element as claimed in Claim 31, 32 or 33 and including a compare equality block for comparison of data patterns found within the internal working register and the checksum storage register.
